# EUROPÄISCHE PATENTSCHRIFT

(11) **EP 1 494 878 B1**
(45) Veröffentlichungstag und Bekanntmachung des Hinweises auf die Patenterteilung: **29.09.2010**
(21) Anmeldenummer: 03717296.2
(22) Anmeldetag: 11.04.2003
(51) Int. Cl.: B60C 23/06

(54) **VERFAHREN ZUR ERKENNUNG VON REIFENEIGENSCHAFTEN**
METHOD FOR IDENTIFYING TIRE CHARACTERISTICS
PROCEDE D'IDENTIFICATION DE CARACTERISTIQUES D'UN PNEU

(30) Priorität: 17.04.2002 DE 10217133; 20.12.2002 DE 10261094
(43) Veröffentlichungstag der Anmeldung: 12.01.2005
(73) Patentinhaber: Continental Teves AG & Co. oHG, 60488 Frankfurt am Main (DE); Continental AG, 30165 Hannover (DE); Daimler AG, 70327 Stuttgart (DE)
(72) Erfinder: GRIESSER, Martin, 65760 Eschborn (DE); KÖBE, Andreas, 64625 Bensheim (DE); EDLING, Frank, 65929 Frankfurt (DE); HOLTZ, Michael, 30938 Burgwedel-Töniz (DE); PERRAS, Karl, 75417 Mühlacker-Enzberg (DE)
(86) Internationale Anmeldenummer: PCT/EP2003/003780
(87) Internationale Veröffentlichungsnummer: WO 2003/086789

(56) Entgegenhaltungen:
- EP-A- 0 441 600
- DE-A- 19 721 480

## Beschreibung

Die Erfindung betrifft ein Verfahren zur Erkennung von Reifeneigenschaften in einem elektronischen Steuergerät für Kraftfahrzeuge.

Gemäß dem Verfahren der Erfindung lässt sich erkennen, ob Neureifen am Fahrzeug montiert sind.

Neureifen können ein anhaltendes Wachstum des dynamischen Abrollumfangs bis zu 1,0 % des Abrollumfangs zeigen, insbesondere wenn sie erstmals bei hoher Fahrgeschwindigkeit betrieben werden. Es hat sich gezeigt, dass das Umfangswachstum oberhalb einer bestimmten Geschwindigkeit einsetzt und für eine bestimmte Zeit andauert. Nach dieser Zeit wächst der Umfang nicht mehr weiter, das Neureifenwachstum ist abgeschlossen. Ein weiteres Wachstum tritt dann nur bei weiterer Erhöhung der Geschwindigkeit auf.

Besonders in einem an sich bekannten und gattungsgemäßen Verfahren zur Reifendruckverlusterkennung auf Basis von Raddrehzahlinformationen alleine (z. B. Deflation Detection System, DDS, Fa. Continental Teves AG & Co. oHG, Frankfurt, EP-A 0 983 154) ist es für die Genauigkeit der Erkennung von großer Bedeutung, Effekte die sich auf den dynamischen Abrollumfang beziehen, genau zu kennen. Das erfindungsgemäße Verfahren wird daher bevorzugt in einem solchen bekannten Reifendruckerkennungsverfahren eingesetzt. Der DDS-Algorithmus sammelt zunächst Fahrdaten auf Basis der Raddrehzahlinformationen und berechnet daraus nach dem an sich bekannten Prinzip der Raddrehzahlverhältnisbildung einen Referenzwert (nachfolgend Ref bezeichnet). Der zeitliche Verlauf Ref(t) gibt bereinigt von Störeinflüssen Abweichungen der dynamischen Radumfangsverhältnisse besonders empfindlich wieder. Nach Neustart (Reset) des Algorithmus wird zunächst der Normalzustand eingelernt. Wenn für die statistische Auswertung genügend Drehzahlwerte ausgewertet wurden, wird die Lernphase beendet und ein Lernwert gebildet. Anschließend beginnt die Vergleichsphase, in der die eigentliche Erkennung eines Luftdruckverlustes stattfindet. In der Vergleichsphase werden aktuelle Werte von Ref gesammelt und gemittelt. Sind genügend geeignete Werte gesammelt worden, wird die gemittelte Größe mit dem Lernwert zur Druckverlusterkennung verglichen. Werden in der Erkennungsphase die Reifen neu aufgepumpt oder gewechselt, muss dies dem System von Hand mitgeteilt werden. Es ist aber auch möglich, dass Erkennungseinrichtungen vorgesehen sind, die eine entsprechende Veränderung bei den Reifen signalisieren (DDS-Reset).

Das erfindungsgemäße Verfahren wird bevorzugt als Algorithmus in einem Fahrzeugrechner ausgeführt, welcher über entsprechende Eingänge Informationen der ABS-Raddrehzahlsensoren zugeführt bekommt. Besonders bevorzugt wird der Algorithmus in einem mikroprozessorgesteuerten Bremsensteuergerät ausgeführt, welches ohnehin mit den Raddrehzahlsensoren verbunden ist. Bei diesem Steuergerät handelt es sich insbesondere um ein Steuergerät für herkömmliche hydraulische Bremsanlagen oder für neuere "brake by wire" Bremsanlagen, wie etwa die elektrohydraulische Bremse (EHB) oder die elektromechanische Bremse (EMB).

Gemäß einer bevorzugten Ausführungsform der Erfindung werden im DDS-Algorithmus Lernwerte getrennt für vorgegebene Geschwindigkeitsbereiche gebildet. Auf diese Weise lassen sich geschwindigkeitsabhängige Effekte der Reifen erkennen. Die geschwindigkeitsabhängige Lernwertbildung findet vorzugsweise zusätzlich zur an sich bekannten Bildung von Lernwerten statt.

Das erfindungsgemäße Verfahren ist besonders einfach durchführbar, wenn das beobachtete Reifenwachstum nicht an allen vier Rädern gleichzeitig auftritt. Zum Ermitteln des Rades, an dem ein Reifenwachstum auftritt, lassen sich bevorzugt mehrere verschieden ermittelte Referenzwerte auswerten. Es ergeben sich jeweils in den z. B. seitenweise, kreuzweise (diagonal) oder achsenweise ermittelten Referenzwerten Abweichungen, deren gemeinsame Auswertung eine Bestimmung der Radposition, an der Reifenwachstum aufgetreten ist, zulässt.

Weitere bevorzugte Ausführungsformen ergeben sich aus den Unteransprüchen und der nachfolgenden Beschreibung zweier Ausführungsbeispiele an Hand von Figuren.

Es zeigen
- Fig. 1: einen Algorithmus zur Reifendruckverlusterkennung mit Neureifenerkennung,
- Fig. 2: Diagramme, die den zeitlichen Verlauf der Fahr- zeuggeschwindigkeit wiedergeben,
- Fig. 3: einen Algorithmus zur Reifendruckverlusterkennung mit Neureifenerkennung im Detail,
- Fig. 4: ein Algorithmus zur Erkennung von Reifenwachstum im Detail,
- Fig. 5: weitere Diagramme zur Veranschaulichung der Erken- nung von Reifenwachstum im Detail,
- Fig. 6: schematische Funktionsweise der Neureifenerken- nung.

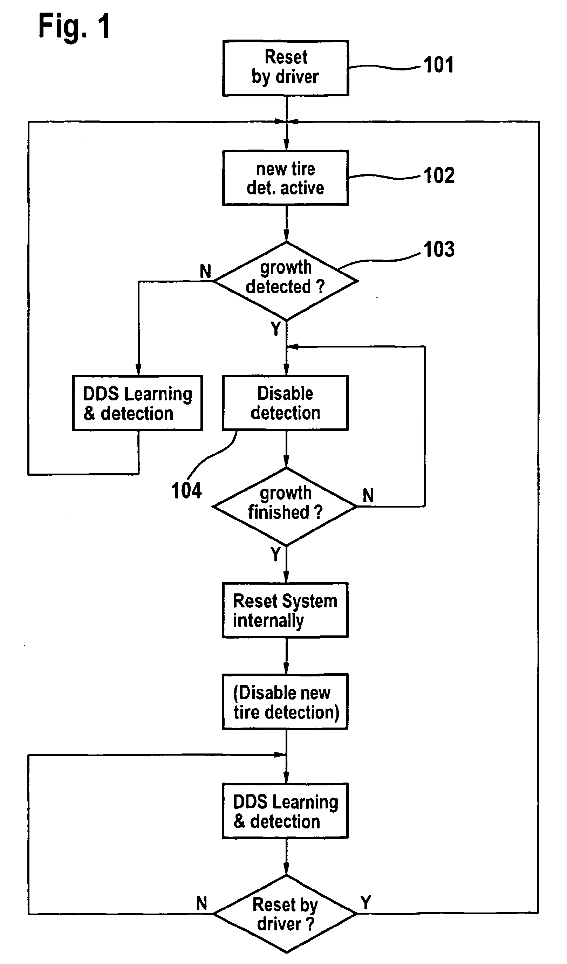

Gemäß einer ersten Ausführungsform wird in Schritt 101, Fig. 1, zunächst dem System z. B. über einen Reset-Taster oder eine automatische Erkennungseinrichtung angezeigt, dass eine manuelle Druckänderung an den Reifen vorgenommen wurde (z. B. Aufpumpen eines oder mehrere Reifen oder Reifenmontage). Es muss nun überprüft werden, ob gleichzeitig neue Reifen montiert worden sind. Hierzu wird die Neureifenerkennungsfunktion nach Drücken des Reset-Tasters in Schritt 102 aktiviert. Wird Neureifenwachstum in Schritt 103 festgestellt, wird in Schritt 104 der Druckverlusterkennungsalgorithmus während dieser Zeit deaktiviert. Nach Beendigung des Neureifenwachstums wird der DDS-Algorithmus wieder aktiviert.

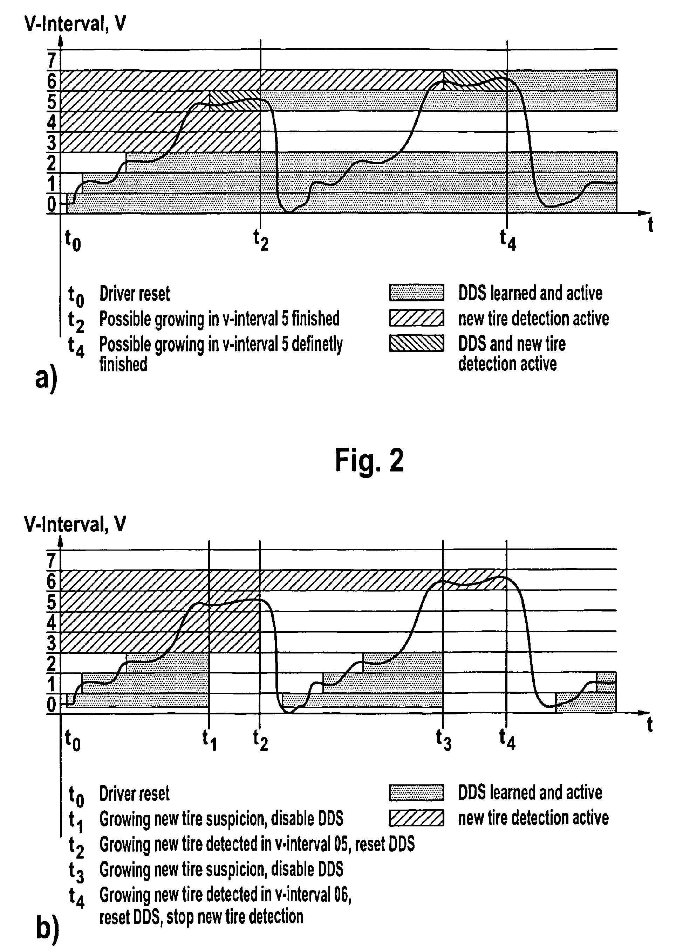

In Fig. 2a) ist die Erkennung an Hand von vier Reifen dargestellt, bei denen das Neureifenwachstum bereits abgeschlossen ist. Teilbild b) zeigt den entsprechenden Kurvenverlauf, wenn zumindest einer der Reifen ein Neureifen mit Umfangswachstum ist. Die Geschwindigkeitsachse V ist in Geschwindigkeitsintervalle V0 bis V7 aufgeteilt. Das weiter oben erwähnte Druckverlusterkennungsverfahren zeichnet zunächst in den Intervallen individuell während einer Lernphase die gewöhnlichen Abrolleigenschaften der Fahrzeugräder in unterschiedlichen Fahrsituationen auf. Wenn die Lernphase beendet ist, wird die Vergleichsphase mit der eigentlichen Druckverlusterkennung aktiviert. Zum Zeitpunkt t0 wird die Reset-Taste gedrückt. Bei t1 besteht Verdacht auf einen Neureifen. DDS wird abgeschaltet. Bei t2 besteht nach einer angemessenen Wartezeit, im Bereich von etwa 10 - 15 min, die Sicherheit, dass das Reifenwachstum in diesem Geschwindigkeitsbereich und in den darunterliegenden Geschwindigkeitsbereichen abgeschlossen ist. Anschließend wird DDS komplett resetiert, so dass die Lernphase mit der anschließenden Vergleichsphase wieder aktiv ist. Erst bei erneuter Neureifenerkennung (Interval V6 bei t3) erfolgt erneut eine Abschaltung von DDS und die Neureifenerkennung wird wie bereits oben beschrieben durchgeführt.

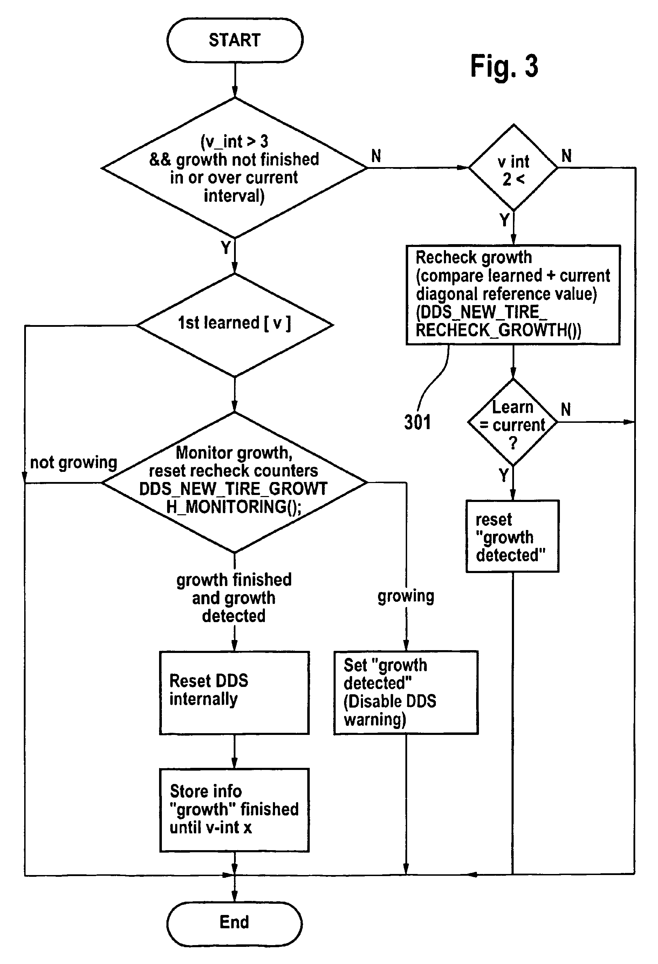

Fig. 3 zeigt im Detail die Funktionsweise des Algorithmus zur Neureifenerkennung in einem DDS-System. Die Variable v_int gibt das momentane Geschwindigkeitsintervall an. Für die Erkennung kann zur Vereinfachung des Problems davon ausgegangen werden, dass das zu erkennende Neureifenwachstum nicht auftritt, bevor der erste Lernwert ermittelt wurde.

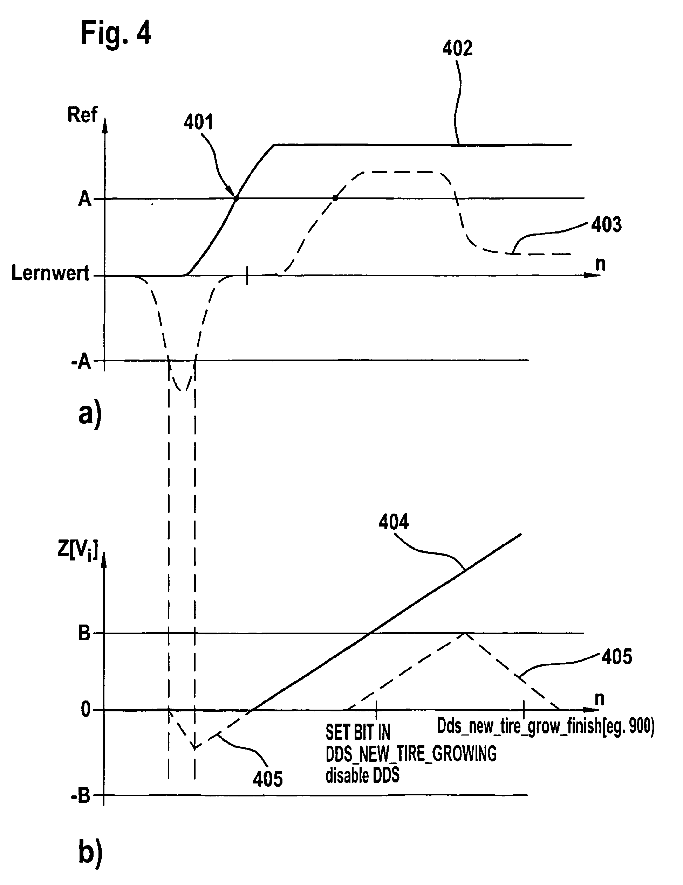

In Fig. 4 ist die Funktionsweise der Neureifenerkennung im Detail erläutert. Das Wachstum des Reifenumfangs wird individuell für verschiedene Geschwindigkeitsintervalle mitgeschrieben. Nach dem Verfahren wird ein Vergleich zwischen dem Lernwert für das momentane Geschwindigkeitsintervall und dem Wert des vorzugsweise gemittelten oder gefilterten Referenzwertes Ref (Y-Achse in Teilbild a)) vorgenommen. Auf der x-Achse ist die Anzahl n der Datensätze (Samples), die bei der Referenzwertermittlung im jeweiligen Geschwindigkeitsintervall berücksichtigt wurden, aufgetragen. Kurve 402 gibt den Verlauf von Ref bei Reifenwachstum wieder. Kurve 403 zeigt den Verlauf bei fehlendem Reifenwachstum. Für die Erkennung eines Reifenwachstums im momentanen V-Intervall wird ein Zähler Z (Y-Achse in Teilbild b)) in jedem V-Intervall verwendet, welcher hochgezählt wird, wenn der Wert Ref größer als die Konstante A ist. Ist der Wert Ref kleiner einer Konstanten -A, wird der Zähler Z heruntergezählt. Kurve 404 gibt den Zählerstand von Z bei Reifenwachstum wieder, Kurve 405 bezieht sich auf das Beispiel ohne Reifenwachstum. Der Zeitpunkt, ab dem der Zähler hochgezählt wird, ist mit 401 bezeichnet. Erreicht der Zähler, wie in Teilbild b) dargestellt, einen oberen oder unteren Grenzwert (Konstante B), so wird die Flagge "growth detected" gesetzt, womit eine Erkennung von Reifenwachstum dem Algorithmus bekannt gemacht wird.

Wenn das Fahrzeug eine bestimmte Zeit in einem V-Intervall (Vᵢ) gefahren ist, wird vom Algorithmus angenommen, dass das Neureifenwachstum abgeschlossen ist. Nach Ablauf der vorbestimmten Zeit wird zu diesem Zweck die Flagge "growth finished in speed intervall V" gesetzt.

### Unterscheidung zwischen Wachstum und Druckverlust

In den nachfolgenden Fällen kann gemäß dem Verfahren der Erfindung zwischen einem Druckverlust und übriggebliebenen Reifenwachstum in folgenden Fällen unterschieden werden:
Fall 1: Der Effekt auf Ref(t) als Folge eines Druckverlusts besitzt eine große Steigung und einen hohen Absolutbetrag im Vergleich zum übriggebliebenen Reifenwachstum.
Fall 2: Eine Raderkennung nach dem weiter unten beschriebenen Verfahren ist möglich.

Bei Fall 1 handelt es sich zum Beispiel um einen Druckverlust während Fahrzeugstillstand nach Einlernen in diesem Geschwindigkeitsintervall oder um einen sehr schnellen Druckverlust. Besonders bevorzugt wird, wenn der Wert von Ref einen zweiten Grenzwert (Konstante C) erreicht, der Zähler Z dem Betrag nach abermals herabgezählt. Hierdurch wird das System davor bewahrt, ein Neureifenanwachsen anzuzeigen, wenn tatsächlich ein Druckverlust vorliegt.

Bei Fall 2 wird folgender physikalischer Zusammenhang angenommen: Druckverluste an einem Rad verursachen einen niedrigeren dynamischen Reifenumfang und somit die Detektion eines schneller drehenden Rades. Im Gegensatz dazu würde anhaltendes Reifenwachstum zu einer verringerten Drehzahl des Rades führen. Auf diese Weise kann Wachstum im Falle der Erkennung eines schnellen Rades ausgeschlossen werden. Im letztgenannten Fall wird der Zähler für die Druckerkennung ZP um den Wert 1 nach oben gezählt.

### Konsequenzen der Wachstumserkennung

Wenn das Neureifenwachstum in einem V-Intervall erkannt wurde, wird die Flagge "growth detected" gesetzt. Als Folge davon wird der Zähler ZP, welcher für die Druckverlusterkennung vorgesehen ist, nicht mehr weiter gezählt. Eine Druckverlustwarnung bleibt aus, da diese erst aktiviert wird, wenn ZP einen vorgegebenen Zählerstand überschritten hat. Wenn zusätzlich kein Wachstum im aktuellen V-Intervall mehr stattfindet, wird das System zurückgesetzt (Reset), so dass die Lernphase in allen V-Intervallen von neuem beginnt. Die Information über die Beendigung des Neureifenwachstums im jeweiligen V-Intervall wird allerdings durch das System gespeichert.

### Vermeidung von fehlerhafter Neureifenerkennung

Die Funktion "recheck growth" (301 in Fig. 3) dient dem Schutz vor einer fehlerhaften Neureifenerkennung, sie prüft bei niedrigen Geschwindigkeiten z. B. unterhalb von 100 km/h. In diesen niedrigen V-Intervallen kann das Reifenwachstum zumindest dann nicht mehr auftreten, wenn bereits in einem höheren Geschwindigkeitsintervall ein Reifenwachstum stattgefunden hat.

Hierbei liegt folgende Erkenntnis zugrunde: Wenn im niedrigen Geschwindigkeitsintervall die Werte Ref in der Nähe der entsprechenden Lernwerte und gleichzeitig festgestellt wurde, dass in einem hohen Geschwindigkeitsintervall gefahren wurde, dann kann kein verbleibendes Reifenwachstum vom Fahren im hohen Geschwindigkeitsintervall vorhanden sein.

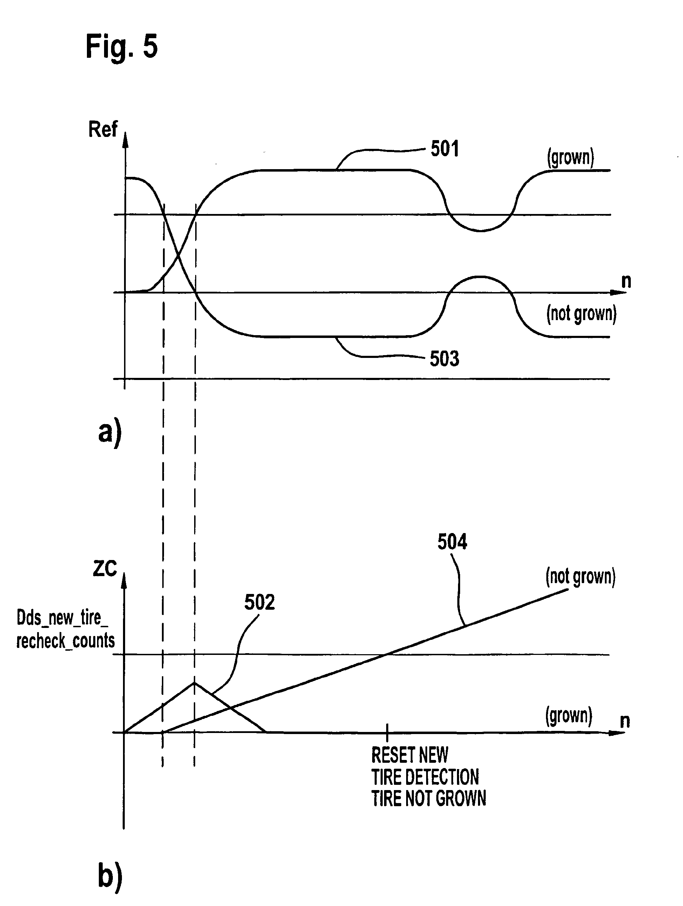

Dieser Zusammenhang wird in Fig. 5 deutlich gemacht. Ein weiter Zähler ZC wird dazu genutzt festzustellen, ob der aktuelle Wert von Ref in der Nähe des jeweiligen Lernwertes liegt. In Teilbild a) ist der Wert von Ref über der Anzahl von Samples n aufgetragen. Teilbild b) trägt den Wert des Zählers ZC gegen n auf. Die Kurven 501 und 502 sind Kurven für neue Reifen mit Wachstum; Kurven 503 und 504 stammen von Reifen ohne Neureifenwachstum.

### Vermeidung von fehlerhafter Nachüberprüfung

Die Funktion "recheck growth" kann ebenfalls fehlerhaft sein, wenn ein V-Intervall für die Nachüberprüfung nicht gelernt wurde bevor die Nachprüffunktion aktiv wurde. Ein möglicher Ausweg besteht darin, die Statusinformation über das Lernen zu dem Zeitpunkt zu speichern, wenn die Flagge "growth detected" gesetzt ist. Die Nachüberprüfungsfunktion kann gerade aktiviert worden sein, wenn die zweite Warnschwelle in einem niedrigen V-Intervall eingelernt wurde, für das die Nachüberprüfungsfunktion vorgesehen ist. Zu Bemerken ist, dass das Arbeiten mit den ersten Schwellenwerten zu Fehlern führen kann, welche durch fortgesetztes Lernen oder neugestartetes Lernen bei fehlerhafter Lern-Erkennung verursacht wird.

Die Information über den Lernstatus im Augenblick der Wachstumserkennung wird in einer hierfür vorgesehenen Variablen bzw. Speicherstelle gespeichert.

### Zurücksetzen (Reset) und Initialisierung

Das System kann vollständig zurückgesetzt werden, wenn ein Reset durch den Fahrer oder eine Diagnosefunktion festgestellt wurde. Die Flaggen zur Erkennung des Neureifenwachstums werden bei einem eventuell aus anderem Grund durchzuführenden internen DDS-Reset nicht zurückgesetzt.

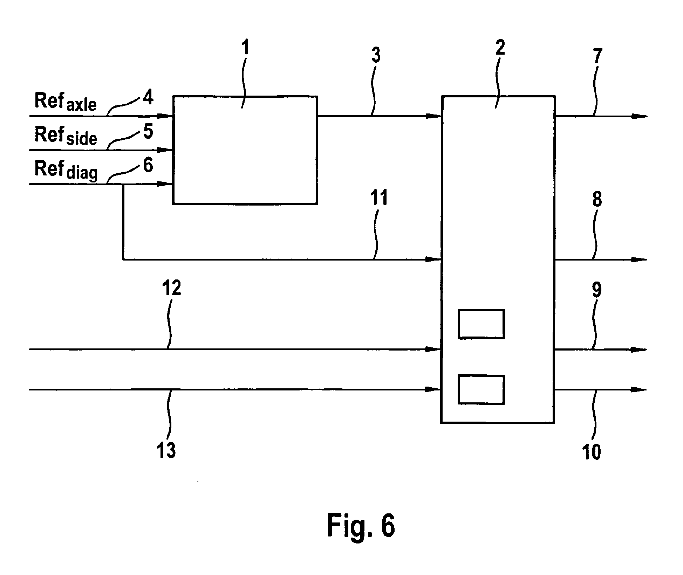

Gemäß eines zweiten Ausführungsbeispiels, welches alternativ oder zusammen mit dem ersten Ausführungsbeispiel eingesetzt werden kann, ermittelt das weiter oben beschriebene DDS-Druckverlusterkennungsverfahren zunächst auf an sich bekannte Weise drei verschieden ermittelte Referenzwerte, Ref_{diag} (Fig. 6, Bezugszeichen 6), für die Diagonalenverhältnisse, Ref_{side}, für die Seitenverhältnisse und Refₐₓₗₑ, für die Achsverhältnisse. Nach Beendigung einer Lernphase liegen für jeden dieser Referenzwerte Lernwerte vor, an Hand derer sich durch Vergleich mit aktuell ermittelten Referenzwerten ein Druckverlust auf an sich bekannte Weise feststellen lässt. Ein Neustart der Lernphase beginnt normalerweise durch Betätigung eines Reset-Tasters durch den Fahrer nach einem Reifenfüllvorgang oder nach einem Wechsel der Reifen bzw. Räder.

Vorzugsweise ist zusätzlich vorgesehen, dass nach einem Ansprechen des Verfahrens zur Neureifenerkennung, welches beispielsweise einen Neustart von DDS auslöst, die Erkennung nicht noch ein zweitesmal aktiviert ist. Damit wird verhindert, dass das System ständig den aktuellen Referenzwerten mit mehrfachen DDS-Resets "hinterherlernt". Eine ausreichend empfindliche Druckverlusterkennung wäre in diesem Fall nicht mehr sichergestellt. Eine neuerliche Erkennung ist insbesondere erst dann wieder möglich, wenn ein Signal für einen DDS-Reset erzeugt worden ist, zum Beispiel nach der Montage von neuen Reifen.

Der bereits beschriebene Ausdehnungseffekt eines Neureifens kann die obige Druckverlusterkennung stören. Daher werden die entsprechenden Effekte eines Neureifens auf nachfolgende Weise berücksichtigt.

In Fig. 6 ist die Funktionsweise der Neureifenerkennung schematisch dargestellt. Das nicht dargestellte Funktionsmodul "DDS" stellt drei verschieden ermittelte Referenzwerte 4, 5, 6 zur Verfügung. Nach dem Verfahren wird die Differenz zwischen einem eingelernten Lernwert und einem aktuell ermittelten (gefilterten) Referenzwert betrachtet. Wenn ein Reifen wächst, rotiert das entsprechende Rad langsamer. Dies führt zu einer Veränderung des Referenzwertes für das Diagonalen-, Seiten- und Achsenverhältnis. Die Änderung der drei Werte ist von der Änderung bei Druckverlust unterscheidbar. In Funktionsgruppe 1 wird unter Zuhilfenahme weiterer verschieden ermittelter Referenzwerte festgestellt, welches Rad einen Neureifeneffekt aufweist. Diese Information wird an eine Wahrscheinlichkeitsüberwachung 2 über Signalweg 3 weitergegeben. Überschreitet die Veränderung (Differenz zwischen dem jeweiligen Ref-Wert und dem zugehörigen Lernwert) eine erste Schwelle, die niedriger ist, als die DDS-Schwelle für die Druckverlusterkennung, besteht ein Verdacht für Reifenwachstum. Die Wahrscheinlichkeit, dass Reifenwachstum vorliegt, wird durch weitere in zeitlicher Folge ermittelte Referenzwerte größer, wenn ein aktueller Referenzwert ebenfalls die obigen Kriterien erfüllt. In Funktionsmodul 2 wird die Wahrscheinlichkeit mit einem einfachen Zähler ausgeführt. Überschreitet dieser Zähler einen vorgegebenen Schwellenwert, liegt Neureifenwachstum mit hoher Wahrscheinlichkeit vor. In diesem Fall werden Reset-Signale über Leitungen 8, 9, 10 an das Modul "DDS" ausgegeben. Leitung 7 setzt die DDS-Funktion vorübergehend außer Kraft.

Nach einer bevorzugten Ausführungsform des Verfahrens wird über Signalleitung 11 eine zusätzliche Verarbeitung des Referenzwertes für das Diagonalenverhältnis vorgenommen, bei der die Schwellenwerte für die Auswertung des Diagonalenverhältnis gegenüber den übrigen Referenzwerten höher festgelegt sind. Auf diese Weise ist es möglich, die Erkennungssicherheit der Neureifenerkennung noch weiter zu erhöhen.

Leitung 12 überträgt eine durch Funktionsmodul "DDS" ermittelte Größe über die Qualität des Fahrbahnzustandes und der Signalqualität. Ist die Qualität der Fahrbahn oder der Signale zu gering, wird vorzugsweise die Erhöhung des Zählerstands bei einem Verdacht auf Neureifenwachstum unterdrückt.

Signalleitung 13 ist vorgesehen, um die Erkennung von Neureifenwachstum auf bestimmte, vorausgewählte Kilometerstände einzuschränken. Diese Funktion basiert auf dem Gedanken, dass ab einem bestimmten, geeignet festzulegenden Kilometerstand kein Neureifenwachstum mehr auftreten kann. Bevorzugt wird der Kilometerstand auf den letzten DDS-Reset bezogen, damit ein Reifenwechsel durch das System nicht unberücksichtigt bleibt.

Die vorstehend beschriebene Methode der Erkennung eines Neureifenwachstums kann auch für einzelne Geschwindigkeitsintervalle getrennt durchgeführt werden. Wenn zum Beispiel das Fahrzeug eine bestimmte Zeit in einem entsprechenden Geschwindigkeitsintervall gefahren ist, wird vom Algorithmus angenommen, dass das Neureifenwachstum nur für dieses Intervall abgeschlossen ist. Entsprechend kann auch das Einlernen und Auswerten der Referenzwerte für verschiedene Geschwindigkeitsintervalle unabhängig voneinander durchgeführt werden, wenn ausreichend Speicherplatz zur Verfügung steht.

Eine Unterscheidung zwischen Reifenwachstum und Druckverlust kann vorzugsweise auch dadurch erfolgen, dass ein oberer Schwellenwert festgelegt wird, welche durch den Einfluss von Reifenwachstum auf die Änderung eines Referenzwertes nicht überschritten werden kann.

Weitere Möglichkeiten zur Unterscheidung zwischen Reifenwachstum und Druckverlust:
- Der Effekt auf einen Referenzwert als Folge eines Druckverlusts besitzt eine große Steigung.

Besonders bevorzugt wird, wenn der Wert von Ref den zweiten Grenzwert erreicht oder überschreitet, der Wahrscheinlichkeitszähler herabgezählt. Hierdurch wird das System davor bewahrt, ein Neureifenanwachsen anzuzeigen, wenn tatsächlich ein Druckverlust vorliegt.

## Patentansprüche

1. Verfahren zur Erkennung eines Reifendruckverlusts, bei dem eine Erkennung des Wachstums des dynamischen Umfangs von Neureifen durchgeführt wird, wobei auf Basis von Raddrehzahlinformationen mindestens ein Referenzwert Ref gebildet wird, welcher insbesondere eine seitenweise und/oder kreuzweise Relation der Kraftfahrzeugräder untereinander darstellt, und der zeitliche Verlauf des/der Referenzwerte betrachtet wird, **dadurch gekennzeichnet, dass**
- auf Grundlage des Verlaufs Reifenwachstum erkannt wird,
- wobei das Umfangswachstum in vorgegebenen Geschwindigkeitsbereichen individuell betrachtet wird und
- in einem ersten niedrigen Geschwindigkeitsintervall berücksichtigt wird, ob in einem zweiten höheren Geschwindigkeitsintervall bereits Umfangswachstum stattgefunden hat.

2. Verfahren nach Anspruch 1, **dadurch gekennzeichnet, dass** die gebildeten Referenzwerte mit eingelernten Lernwerten verglichen werden und auf Grundlage des Vergleichs Neureifenwachstum erkannt wird.

3. Verfahren nach Anspruch 1 oder 2, **dadurch gekennzeichnet, dass** Lernwerte für vorgegebene Geschwindigkeitsintervalle individuell gelernt werden.

4. Verfahren nach mindestens einem der Ansprüche 1 bis 3, **dadurch gekennzeichnet, dass** für den Fall, dass sich das Fahrzeug länger als eine vorbestimmte Zeit in einem vorgegebenen Geschwindigkeitsintervall befindet angenommen wird, dass das Umfangswachstum in diesem Intervall abgeschlossen ist.

5. Verfahren nach mindestens einem der Ansprüche 1 bis 4, **dadurch gekennzeichnet, dass** ein oder mehrere aktuelle Referenzwerte mit einem oder mehreren Lernwerten verglichen werden und in Abhängigkeit der Abweichung/-en des/der Referenzwerte/-s vom Lernwert auf einen Reifendruckverlust geschlossen wird.

6. Verfahren nach Anspruch 5, **dadurch gekennzeichnet, dass** das Druckverlusterkennungssystem deaktiviert wird, während Umfangswachstum stattfindet oder festgestellt wird.

7. Verfahren nach Anspruch 5 oder 6, **dadurch gekennzeichnet, dass** zur Unterscheidung zwischen Druckverlust und Umfangswachstum das Vorzeichen der Drehzahländerung des betrachteten Rades ausgewertet wird.

8. Verfahren nach mindestens einem der Ansprüche 5 bis 7, **dadurch gekennzeichnet, dass** zur Unterscheidung zwischen Druckverlust und Umfangswachstum die erste Ableitung von Ref(t) und der Absolutbetrag der Abweichung vom Lernwert betrachtet wird.

9. Verfahren nach mindestens einem der Ansprüche 1 bis 8, **dadurch gekennzeichnet, dass** zum Ermitteln der Montageposition des Rades, welches ein Reifenwachstum zeigt,
- ein Vergleich des Verlaufs oder der Abweichungen von eingelernten Werten zwischen mindestens zwei, insbesondere drei, verschieden ermittelten Referenzwerten durchgeführt wird,
wobei sich die verschieden ermittelten Referenzwerte **dadurch** unterscheiden, dass diese insbesondere Diagonalverhältnisse, Seitenverhältnisse und Achsverhältnisse repräsentieren.

10. Verfahren nach Anspruch 9, **dadurch gekennzeichnet, dass** auf Reifenwachstum geschlossen wird, wenn die mindestens zwei, insbesondere drei, Referenzwerte unabhängig voneinander Reifenwachstum erkennen lassen, was insbesondere durch Betrachtung und Vergleich des Vorzeichens der beobachteten Referenzwertänderungen möglich ist.

11. Verfahren nach mindestens einem der Ansprüche 1 bis 10, **dadurch gekennzeichnet, dass** die Abweichung zwischen einem Referenzwert und einem eingelernten Wert für diesen Referenzwert betrachtet wird und bei einer Überschreitung dieser Abweichung eines ersten Schwellenwertes DDS_FOR_GROW ein Wahrscheinlichkeitswert erhöht wird.

12. Verfahren nach Anspruch 11, **dadurch gekennzeichnet, dass** der Wahrscheinlichkeitswert eine Wahrscheinlichkeitsschwelle COUNT_GR besitzt, deren Überschreitung signalisiert, dass Reifenwachstum vorliegt, wobei der durch den Wahrscheinlichkeitszähler angegebene Grad der Wahrscheinlichkeit davon abhängt, wie häufig innerhalb eines bestimmten Zeitraums der Schwellenwert DDS_FOR_GROW überschritten wurde.

13. Verfahren nach Anspruch 11 oder 12, **dadurch gekennzeichnet, dass** der Wahrscheinlichkeitswert nur dann erhöht wird, wenn zusätzlich eine oder mehrere der Zusatzbedingungen
- Signalqualität der Referenzwerte,
- Qualität der Fahrbahnbeschaffenheit oder
- gefahrene Wegstrecke innerhalb eines vorgegebenen Bereichs
erfüllt ist.

14. Verfahren nach mindestens einem der Ansprüche 1 bis 13, **dadurch gekennzeichnet, dass** für den Fall, dass ein oder mehrere Referenzwerte einen Schwellenwert DDS_MAX_GROW überschreiten, nicht auf Reifenwachstum geschlossen wird.

15. Verfahren nach mindestens einem der Ansprüche 1 bis 14, **dadurch gekennzeichnet, dass** das Verfahren zur Erkennung von Neureifen in einen Ausgangszustand zurückgesetzt wird, wenn ein Reifenwechselrücksetzsignal, wie insbesondere ein DDS-Reset, detektiert wird.

16. Verfahren nach mindestens einem der Ansprüche 1 bis 15, **dadurch gekennzeichnet, dass** im Falle der Feststellung von Neureifenwachstum ein indirektes, auf Basis der Radgeschwindigkeiten arbeitendes, Druckverlusterkennungssystem (DDS) in einen Anfangszustand zurückgesetzt wird (DDS-Reset).

## Claims

1. Method for identifying a loss of tyre pressure, in which the growth in the dynamic circumference of new tyres is detected, wherein at least one reference value Ref, which represents, in particular, a sideways and/or crossways relationship between the vehicle wheels, is formed on the basis of wheel speed information, and the time profile of the reference value/values is considered, **characterized in that**
- the growth in tyre is detected on the basis of the profile,
- wherein the growth in the circumference is calculated individually in predefined speed ranges, and
- in a first low speed interval it is taken into account whether growth in the circumference has already taken place in a second, relatively high speed interval.

2. Method according to Claim 1, **characterized in that** the reference values which are formed are compared with learnt values and new growth in the tyre is detected on the basis of the comparison.

3. Method according to Claim 1 or 2, **characterized in that** learnt values are learnt individually for predefined speed intervals.

4. Method according to at least one of Claims 1 to 3, **characterized in that** in the event of the vehicle being located in a predefined speed interval for longer than a predefined time, it is assumed that the growth in circumference has finished in this interval.

5. Method according to at least one of Claims 1 to 4, **characterized in that** one or more current reference values are compared with one or more learnt values, and a loss of tyre pressure is concluded as a function of the deviation/deviations of the reference value/values from the learnt value.

6. Method according to Claim 5, **characterized in that** the pressure-loss-detection system is deactivated while growth in the circumference takes place or is detected.

7. Method according to Claim 5 or 6, **characterized in that** the sign of the change in rotational speed of the wheel which is taken into account is evaluated in order to differentiate between the pressure loss and growth in circumference.

8. Method according to at least one of Claims 5 to 7, **characterized in that** the first derivative of Ref(t) and the absolute value of the deviation from the learnt value is taken into account in order to differentiate between the pressure loss and the growth in circumference.

9. Method according to at least one of Claims 1 to 8, **characterized in that**, in order to determine the mounting position of the wheel which indicates a growth in a tyre,
- a comparison of the profile or of the deviations from learnt values is carried out between at least two, in particular three, reference values which are determined in different ways,
wherein the reference values which are determined in different ways are differentiated by the fact that they represent, in particular diagonal relationships, lateral relationships and axial relationships.

10. Method according to Claim 9, **characterized in that** growth in a tyre is determined if the at least two, in particular three, reference values permit growth in a tyre to be detected independently of one another, which is possible, in particular, by considering and comparing the sign of the changes in reference value which are observed.

11. Method according to at least one of Claims 1 to 10, **characterized in that** the deviation between a reference value and a learnt value for this reference value is taken into account, and a probability value is increased when this deviation exceeds a first threshold value DDS_FOR_GROW.

12. Method according to Claim 11, **characterized in that** the probability value has a probability threshold COUNT_GR whose upward transgression signals that growth in a tyre has occurred, wherein the degree of probability which is indicated by the probability counter depends on how frequently the threshold value DDS_FOR_GROW has been exceeded within a specific time period.

13. Method according to Claim 11 or 12, **characterized in that** the probability value is increased only if one or more of the additional conditions are additionally met:
- signal quality of the reference values,
- quality of the condition of the carriageway, or
- section of road travelled along within a predefined area.

14. Method according to at least one of Claims 1 to 13, **characterized in that** in the event of one or more reference values exceeding a threshold value DDS_MAX_GROW, it is not determined that growth has occurred in a tyre.

15. Method according to at least one of Claims 1 to 14, **characterized in that** the method for detecting new tyres is reset to an initial state if a tyre change reset signal, in particular a DDS reset, is detected.

16. Method according to at least one of Claims 1 to 15, **characterized in that** in the case of the detection of growth in a new tyre, an indirect pressure loss detection system (DDS) which operates on the basis of the wheel speeds is reset to an initial state (DDS reset).

## Revendications

1. Procédé pour identifier une perte de pression de pneumatique, avec lequel une identification de la croissance de la périphérie dynamique de pneumatiques neufs est effectuée, au moins une valeur de référence Ref étant formée sur la base d'informations sur la vitesse de la roue, laquelle représente en particulier une relation latérale et/ou croisée entre les roues du véhicule automobile, et
la variation dans le temps de la/des valeur(s) de référence étant examinée, **caractérisé en ce que**
- la croissance du pneumatique est identifiée sur la base de la variation,
- la croissance de la périphérie étant examinée individuellement dans des plages de vitesse prédéfinies et
- dans un premier intervalle de vitesse faible, il est tenu compte du fait de savoir si une croissance de la périphérie a déjà eu lieu dans un second intervalle de vitesse supérieur.

2. Procédé selon la revendication 1, **caractérisé en ce que** les valeurs de référence formées sont comparées avec des valeurs d'apprentissage intégrées et la croissance du pneumatique neuf est identifiée sur la base de la comparaison.

3. Procédé selon la revendication 1 ou 2, **caractérisé en ce que** des valeurs d'apprentissage sont apprises individuellement pour des intervalles de vitesse prédéfinis.

4. Procédé selon au moins l'une des revendications 1 à 3, **caractérisé en ce que**, dans le cas où le véhicule se trouve plus longtemps qu'un temps prédéfini dans un intervalle de vitesse prédéfini, on suppose que la croissance de la périphérie est terminée dans cet intervalle.

5. Procédé selon au moins l'une des revendications 1 à 4, **caractérisé en ce qu'**une ou plusieurs valeurs de référence actuelles sont comparées avec une ou plusieurs valeurs d'apprentissage, et en fonction de l'écart ou des écarts entre la ou les valeurs de référence et la valeur d'apprentissage, on conclut à une perte de pression de pneumatique.

6. Procédé selon la revendication 5, **caractérisé en ce que** le système d'identification de perte de pression est désactivé lorsqu'une croissance de la périphérie a lieu ou est constatée.

7. Procédé selon la revendication 5 ou 6, **caractérisé en ce que** le signe de la variation de vitesse de la roue examinée est analysé pour faire une différenciation entre perte de pression et croissance de la périphérie.

8. Procédé selon au moins l'une des revendications 5 à 7, **caractérisé en ce que** la première dérivée de Ref(t) et la valeur absolue de l'écart par rapport à la valeur d'apprentissage sont examinées pour faire une différenciation entre perte de pression et croissance de la périphérie.

9. Procédé selon au moins l'une des revendications 1 à 8, **caractérisé en ce que**, pour déterminer la position de montage de la roue qui présente une croissance du pneumatique,
- on effectue une comparaison de la variation ou des écarts de valeurs intégrées entre au moins deux, en particulier trois, valeurs de référence déterminées différemment,
les valeurs de référence déterminées différemment se différenciant par le fait que ces valeurs représentent en particulier des rapports de diagonale, des rapports de côté et des rapports d'axe.

10. Procédé selon la revendication 9, **caractérisé en ce qu'**on conclut à une croissance du pneumatique lorsque lesdites au moins deux, en particulier trois, valeurs de référence permettent d'identifier une croissance du pneumatique indépendamment les unes des autres, ce qui est possible en particulier par l'examination et la comparaison du signe des variations observées de la valeur de référence.

11. Procédé selon au moins l'une des revendications 1 à 10, **caractérisé en ce que** l'écart entre une valeur de référence et une valeur intégrée est examiné pour cette valeur de référence et une valeur de probabilité est augmentée dans le cas d'un dépassement de cet écart d'une première valeur seuil DDS_FOR_GROW.

12. Procédé selon la revendication 11, **caractérisé en ce que** la valeur de probabilité possède un seuil de probabilité COUNT_GR, dont le dépassement signale qu'on est en présence d'une croissance du pneumatique, le degré de probabilité, indiqué par le compteur de probabilité, dépendant de la fréquence avec laquelle la valeur seuil DDS_FOR_GROW a été dépassée pendant une période définie.

13. Procédé selon la revendication 11 ou 12, **caractérisé en ce que** la valeur de probabilité n'est augmentée que dans les cas où en supplément une ou plusieurs des conditions supplémentaires suivantes est/sont satisfaite(s) :
- qualité du signal des valeurs de référence,
- qualité de la nature de la chaussée ou
- tronçon de chemin parcouru à l'intérieur d'une zone prédéfinie.

14. Procédé selon au moins l'une des revendications 1 à 13, **caractérisé en ce que**, dans le cas où une ou plusieurs valeurs de référence dépasse(nt) une valeur seuil DDS_MAX_GROW, on ne conclut pas à une croissance du pneumatique.

15. Procédé selon au moins l'une des revendications 1 à 14, **caractérisé en ce que** le procédé pour identifier des pneumatiques neufs est remis dans un état initial lorsqu'un signal de réinitialisation de changement de pneumatique, comme en particulier un DDS-Reset, est détecté.

16. Procédé selon au moins l'une des revendications 1 à 15, **caractérisé en ce que**, dans le cas où l'on constate une croissance du pneumatique neuf, un système d'identification de perte de pression (DDS) indirect, travaillant sur la base des vitesses de roue, est remis dans un état initial (DDS-Reset).
